# EUROPEAN PATENT APPLICATION

(11) **EP 4 788 015 A1**
(43) Date of publication of application: **05.08.2026**
(21) Application number: 23954220.2
(22) Date of filing: 27.09.2023
(51) Int. Cl.: H04W 72/21, H04W 16/28, H04W 72/115, H04W 72/231

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2023/035119
(87) International publication number: WO 2025/069244

(57) **Abstract**

A terminal according to an aspect of the present disclosure includes: a receiving section that receives a first configuration related to a configured grant physical uplink shared channel (CG PUSCH) and a second configuration related to application of an indicated Transmission Configuration Indication (TCI) state; and a control section that performs at least one of assumption, based on the second configuration, of a configuration related to a sounding reference signal resource indicator (SRI) field included in the first configuration and a configuration related to a precoding and number of layers field included in the first configuration and judgement, based on the second configuration, of an association between a CG PUSCH related to the first configuration and a sounding reference signal (SRS) resource set. An aspect of the present disclosure allows UL transmission to be appropriately controlled even in a case where the UL transmission is performed using a plurality of TRPs and a plurality of panels.

## Description

### Technical Field

The present disclosure relates to a terminal, a radio communication method, and a base station in next-generation mobile communication systems.

### Background Art

In a Universal Mobile Telecommunications System (UMTS) network, the specifications of Long Term Evolution (LTE) have been drafted for the purpose of further increasing high speed data rates, providing lower latency, and the like (Non-Patent Literature 1). In addition, for the purpose of further high capacity, advancement, and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems, a UE is able to use one of a plurality of panels (or beams) for uplink (UL) transmission. For Rel. 18 or later versions, in order to improve UL throughput/reliability, it is under study to support simultaneous multi-panel transmission using a plurality of panels (Simultaneous Transmission across Multiple Panels (STxMP)), for one or more transmission/reception points (TRPs).

However, studies have not sufficiently been made on how control is performed in a case where UL transmission (for example, simultaneous UL transmission) using a plurality of TRPs and a plurality of panels is supported. If UL transmission using a plurality of TRPs and a plurality of panels is not appropriately performed, system performance degradation, such as reduction in throughput, may be caused.

In view of this, an object of the present disclosure is to provide a terminal, a radio communication method, and a base station that allow UL transmission to be appropriately controlled even in a case where the UL transmission is performed using a plurality of TRPs and a plurality of panels.

### Solution to Problem

A terminal according to an aspect of the present disclosure includes: a receiving section that receives a first configuration related to a configured grant physical uplink shared channel (CG PUSCH) and a second configuration related to application of an indicated Transmission Configuration Indication (TCI) state; and a control section that performs at least one of assumption, based on the second configuration, of a configuration related to a sounding reference signal resource indicator (SRI) field included in the first configuration and a configuration related to a precoding and number of layers field included in the first configuration and judgement, based on the second configuration, of an association between a CG PUSCH related to the first configuration and a sounding reference signal (SRS) resource set.

### Advantageous Effects of Invention

An aspect of the present disclosure allows UL transmission to be appropriately controlled even in a case where the UL transmission is performed using a plurality of TRPs and a plurality of panels.

### Brief Description of Drawings

[FIG. 1] FIGS. 1A and 1B are diagrams to show examples of a unified/common TCI framework.
[FIG. 2] FIGS. 2A and 2B are diagrams to show examples of DCI-based TCI state indication.
[FIG. 3] FIGS. 3A and 3B are diagrams to show examples of an RRC field and a DCI field in Rel. 17.
[FIG. 4] FIGS. 4A and 4B are diagrams to show examples of single-panel transmission.
[FIG. 5] FIGS. 5A to 5C are diagrams to show examples of multi-panel transmission.
[FIG. 6] FIGS. 6A to 6D are diagrams to show examples of single-DCI-based STxMP.
[FIG. 7] FIGS. 7A and 7B are diagrams to show examples of single-DCI-based STxMP.
[FIG. 8] FIG. 8A to 8C are diagrams to show examples of multi-DCI-based STxMP.
[FIG. 9] FIGS. 9A and 9B are diagrams to show examples of a parameter in a CG configuration according to a first embodiment.
[FIG. 10] FIG. 10 is a diagram to show an example of a schematic structure of a radio communication system according to one embodiment.
[FIG. 11] FIG. 11 is a diagram to show an example of a structure of a base station according to one embodiment.
[FIG. 12] FIG. 12 is a diagram to show an example of a structure of a user terminal according to one embodiment.
[FIG. 13] FIG. 13 is a diagram to show an example of a hardware structure of the base station and the user terminal according to one embodiment.
[FIG. 14] FIG. 14 is a diagram to show an example of a vehicle according to one embodiment.

### Description of Embodiments

### (TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (expressed as a signal/channel) in a UE, based on a transmission configuration indication state (TCI state) is under study.

The TCI state may be a state applied to a downlink signal/channel. A state that corresponds to a TCI state applied to an uplink signal/channel may be expressed as a spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same.

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### {Physical Layer Procedure/Antenna Port QCL for Data}

The UE can be configured with a list of up to M TCI-State (TCI state) configurations in a higher layer parameter "PDSCH-Config" for decoding of a PDSCH, in accordance with a detected PDCCH with DCI for the UE and a given serving cell. Here, M depends on a UE capability "maxNumberConfiguredTCIstatesPerCC."

Each TCI-State includes a parameter for configuration of a QCL relationship between one or two downlink reference signals and a DMRS port for a PDSCH, a DMRS port for a PDCCH, or a CSI-RS port for a CSI-RS resource. The QCL relationship is configured by a higher layer parameter "qcl-Type1" for a first DL RS and a higher layer parameter "qcl-Type2" for a second DL RS (if configured).

In a case of two DL RSs, a plurality of QCL types are not the same irrespective of whether reference is reference to the same DL RS or reference to different DL RSs. A QCL type corresponding to each DL RS is given by a higher layer parameter "qcl-Type" in QCL-Info, and takes one of the following values.
- 'typeA': {Doppler shift, Doppler spread, average delay, delay spread}
- 'typeB': {Doppler shift, Doppler spread}
- 'typeC': {Doppler shift, average delay}
- 'typeD': {Spatial Rx parameter}

### {RRC Protocol Specification/RRC IE/TCI State}

A TCI-State (TCI state) associates one or two DL reference signals (RSs) with a corresponding QCL type. If an additional physical cell identifier (PCI) is configured for the RS, the same value is configured for both of the DL RSs.

### (Unified/common TCI Framework)

With a unified TCI framework, a plurality of types of (UL/DL) channels/RSs can be controlled by a common framework. A unified TCI framework may indicate a common beam (common TCI state) and apply the common beam to all the UL and DL channels instead of defining a TCI state or a spatial relation for each channel as in Rel. 15, or apply a common beam for UL to all the UL channels while applying a common beam for DL to all the DL channels.

One common beam for both DL and UL or a common beam for DL and a common beam for UL (two common beams in total) are studied.

The UE may assume the same TCI state (joint TCI state, joint TCI pool, joint common TCI pool, joint TCI state set) for UL and DL. The UE may assume respective different TCI states (separate TCI states, separate TCI pools, UL separate TCI pool and DL separate TCI pool, separate common TCI pools, UL common TCI pool and DL common TCI pool) for UL and DL.

By beam management based on a MAC CE (MAC CE level beam indication), default UL and DL beams may be aligned. A default TCI state of a PDSCH may be updated to match to a default UL beam (spatial relation).

By beam management based on DCI (DCI level beam indication), a common beam/unified TCI state may be indicated from the same TCI pool (joint common TCI pool, joint TCI pool, set) for both UL and DL. X (>1) TCI states may be activated by a MAC CE. UL/DL DCI may select one from the X active TCI states. The selected TCI state may be applied to channels/RSs of both UL and DL.

The TCI pool (set) may be a plurality of TCI states configured by an RRC parameter or a plurality of TCI states (active TCI states, active TCI pool, set) activated by a MAC CE among the plurality of TCI states configured by the RRC parameter. Each TCI state may be a QCL type A/D RS. As the QCL type A/D RS, an SSB, a CSI-RS, or an SRS may be configured.

The number of TCI states corresponding to each of one or more TRPs may be defined. For example, the number N (≥1) of TCI states (UL TCI states) applied to a UL channel/RS and the number M (≥1) of TCI states (DL TCI states) applied to a DL channel/RS may be defined. At least one of N and M may be notified/configured/indicated for the UE via higher layer signaling/physical layer signaling.

In the present disclosure, description "N = M = X (X is any integer)" may mean that X TCI states (joint TCI states) (corresponding to X TRPs) common to UL and DL are notified/configured/indicated for the UE. Description "N = X (X is any integer), M = Y (Y is any integer, Y may equal X)" may mean that X UL TCI states (corresponding to X TRPs) and Y DL TCI states (corresponding to Y TRPs) (in other words, separate TCI states) are each notified/configured/indicated for the UE.

For example, description "N = M = 1" may mean that one TCI state common to UL and DL is notified/configured/indicated for the UE, the TCI state being for a single TRP (joint TCI state for a single TRP).

For example, description "N = 1, M = 1" may mean that one UL TCI state and one DL TCI state for a single TRP are separately notified/configured/indicated for the UE (separate TCI state for a single TRP).

For example, description "N = M = 2" may mean that a plurality of (two) TCI states common to UL and DL are notified/configured/indicated for the UE, the plurality of TCI states being for a plurality of (two) TRPs (joint TCI states for multiple TRPs).

For example, description "N = 2, M = 2" may mean that a plurality of (two) UL TCI states and a plurality of (two) DL TCI states for a plurality of (two) TRPs are

### notified/configured/indicated for the UE (separate TCI states for multiple TRPs).

Note that in the above examples, cases where N and M values are 1 or 2 are described, but the N and M values may be 3 or more, and N and M may be different from each other.

For Rel. 17, support of N = M = 1 is under study. For Rel. 18 (or later versions), support of another case is under study.

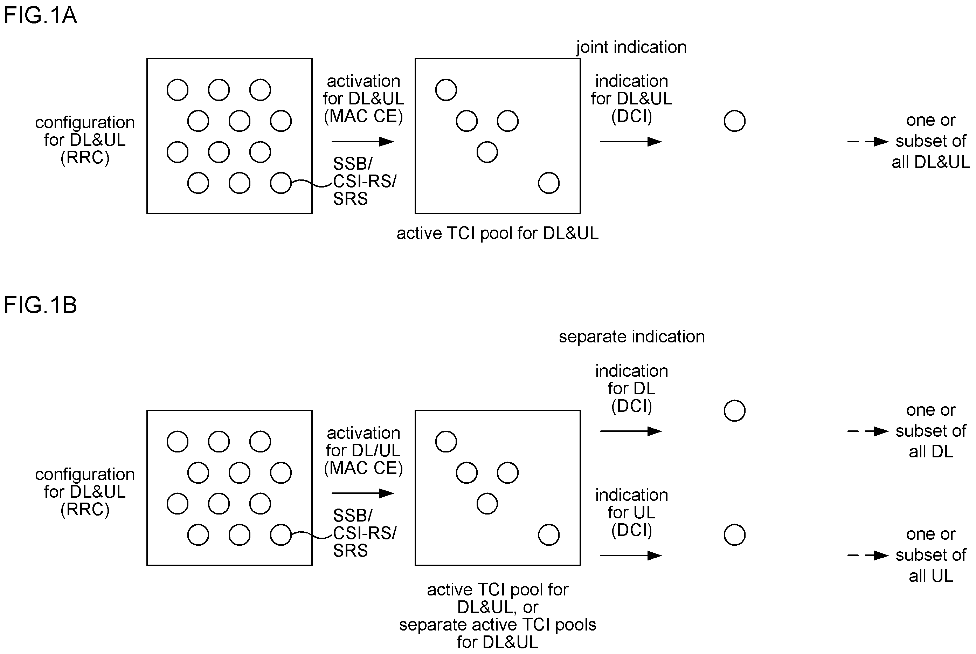

In the example in FIG. 1A, an RRC parameter (information element) configures a plurality of TCI states for both DL and UL. The MAC CE may activate a plurality of TCI states among the plurality of configured TCI states. DCI may indicate one of the plurality of activated TCI states. The DCI may be UL/DL DCI. The indicated TCI state may be applied to at least one (or all) of UL/DL channels/RSs. A DCI may indicate both a UL TCI and a DL TCI.

In the example in FIG. 1A, one dot may be one TCI state applied to both UL and DL or may be two respective TCI states applied to UL and DL.

At least one of the plurality of TCI states configured by the RRC parameter and the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

Note that, in the present disclosure, a higher layer parameter (RRC parameter) that configures a plurality of TCI states may be referred to as configuration information that configures a plurality of TCI states or simply as "configuration information." In the present disclosure, one of a plurality of TCI states being indicated by using DCI may be receiving indication information indicating one of a plurality of TCI states included in DCI or may simply be receiving "indication information."

In the example in FIG. 1B, an RRC parameter configures a plurality of TCI states for both DL and UL (joint common TCI pool). A MAC CE may activate a plurality of TCI states (active TCI pool) among the plurality of configured TCI states. Respective (different, separate) active TCI pools for UL and DL may be configured/activated.

DL DCI or a new DCI format may select (indicate) one or more (for example, one) TCI states. The selected TCI state(s) may be applied to one or more (or all) DL channels/RSs. The DL channel(s) may be a PDCCH/PDSCH/CSI-RS(s). The UE may determine the TCI state of each of the DL channels/RSs by using operation of a TCI state (TCI framework) of Rel. 16. UL DCI or a new DCI format may select (indicate) one or more (for example, one) TCI states. The selected TCI state(s) may be applied to one or more (or all) UL channels/RSs. The UL channel(s) may be a PUSCH/SRS/PUCCH(s). Thus, different DCIs may indicate a UL TCI and a DL DCI separately.

In Rel-17 NR (or later versions), it is assumed that beam activation/indication for TCI states associated with different physical cell identifiers (PCIs) is supported by a MAC CE/DCI. In Rel-18 NR (or later versions), it is assumed that indication of serving cell change for cells including different PCIs is supported by a MAC CE/DCI.

### {Physical Layer Procedure/Antenna Port QCL for Data}

To provide a reference signal for a PDSCH DMRS and a PDCCH DMRS and a CSI-RS in a certain CC, and furthermore, to provide, if a UL TX (transmission) spatial filter for dynamic grant and configured grant-based PUSCH and PUCCH resources and an SRS in the certain CC is available, a reference for determination of the UL TCI filter, the UE can be configured with a list of up to 128 DLorJointTCIState (DL or joint TCI state) configurations in PDSCH-Config (PDSCH configuration).

If configuration of DLorJointTCIState or UL-TCIState (UL TCI State) is absent in a BWP in the CC, the UE can apply configuration of DLorJointTCIState or UL-TCIState from a reference BWP of a reference CC. If the UE is configured with DLorJointTCIState or UL-TCIState in any CC in the same band, the UE does not assume that TCI-State, SpatialRelationInfo (spatial relation information), and PUCCH-SpatialRelationInfo (PUCCH spatial relation information) excluding SpatialRelationInfoPos (spatial relation information for position) in the band are configured. The UE assumes that when the UE is configured with TCI-State in any CC in a CC list by simultaneousTCI-UpdateList1-r16 (simultaneous TCI update list 1), simultaneousTCI-UpdateList2-r16 (simultaneous TCI update list 2), simultaneousSpatial-UpdatedList1-r16 (simultaneous spatial updated list 1), or simultaneousSpatial-UpdatedList2-r16 (simultaneous spatial updated list 2), the UE is not configured with DLorJointTCIState or UL-TCIState in any CC of the CCs.

The UE receives an activation command used to map up to eight TCI states and/or TCI state pairs with one TCI state for a DL channel/signal and one TCI state for a UL channel/signal to a DCI field 'Transmission Configuration Indication' (TCI) codepoint for one of CCs/DL BWPs or a set of CCs/DL BWPs, if available. When a set of TCI state IDs is activated for the set of CCs/DL BWPs, and furthermore, for one of the CCs/DL BWPs, if available, the same set of TCI state IDs is applied to all the DL and/or UL BWPs in an indicated CC. Here, an applicable list of CCs is determined by the CC indicated in the activation command. The UE applies this indicated DLorJointTCIState and/or UL-TCIState to one of the CCs/DL BWPs or a set of CCs/DL BWPs if the activation command maps DLorJointTCIState and/or UL-TCIState to only one TCI codepoint, and applies this indicated DLorJointTCIState and/or UL-TCIState to one of the CCs/DL BWPs or a set of CCs/DL BWPs if indicated mapping for one single TCI codepoint is applied.

When bwp-id or cell for a QCL type A/D source RS in QCL-Info with a TCI state with configured DLorJointTCIState is not configured, the UE assumes that the QCL type A/D source RS is configured in a CC/DL BWP to which the TCI state is applied.

### (TCI State Indication)

A Rel-17 unified TCI framework supports Modes 1 to 3 below.
{Mode 1} MAC CE based TCI state indication
{Mode 2} DCI based TCI state indication with DL assignment (DCI based TCI state indication by DCI format 1_1/1_2 with DL assignment)
{Mode 3} DCI based TCI state indication without DL assignment (DCI based TCI state indication by DCI format 1_1/1_2 without DL assignment)

The UE with a TCI state configured and activated with a Rel-17 TCI state ID (for example, tci-StateId_r17) receives DCI format 1_1/1_2 for providing an indicated TCI state with the Rel-17 TCI state ID, for one CC, or receives DCI format 1_1/1_2 for providing an indicated TCI state with the Rel-17 TCI state ID, for all the CCs in the same CC list as a CC list configured by simultaneous TCI update list 1 or simultaneous TCI update list 2 (for example, simultaneousTCI-UpdateList1 or simultaneousTCI-UpdateList2). DCI format 1_1/1_2 may be accompanied by DL assignment, if available, or may not be accompanied by DL assignment.

If DCI format 1_1/1_2 is not accompanied by DL assignment, the UE can assume (validate), for the DCI, the following.
- A CS-RNTI is used to scramble a CRC for the DCI.
- Values of the following DCI fields (special fields) are set as follows:
   - redundancy version (RV) fields are all '1's
   - modulation and coding scheme (MCS) fields are all '1's
   - a new data indicator (NDI) field is 0
   - frequency domain resource assignment (FDRA) fields are all '0's for FDRA type 0, are all '1's for FDRA type 1, or are all '0's for dynamic switching (DynamicSwitch) (as with validation of a PDCCH with a DL semi-persistent scheduling (SPS) release or a UL grant type 2 scheduling release).

Note that the DCI in mode 2/mode 3 may be referred to as beam indication DCI.

In Rel. 15/16, if the UE does not support active BWP change via DCI, the UE ignores a BWP indicator field. Such operation is also under study for a relationship between support of a Rel-17 TCI state and interpretation of a TCI field. It is studied that if the UE is configured with a Rel-17 TCI state, a TCI field is always present in DCI format 1_1/1_2 and that if the UE does not support TCI update via DCI, the UE ignores a TCI field.

In Rel. 15/16, whether a TCI field is present (TCI-in-DCI presence information, "tci-PresentInDCI") is configured for each

### CORESET.

The TCI field in DCI format 1_1 is 0 bit in a case where a higher layer parameter "tci-PresentInDCI" is not enabled, and is 3 bits in a case other than the case. If the BWP indicator field indicates a BWP other than an active BWP, the UE follows the following operation.
{Operation} If a higher layer parameter "tci-PresentInDCI" is not enabled for a CORESET used for a PDCCH for communicating that DCI format 1_1, the UE assumes that "tci-PresentInDCI" is not enabled for all the CORESETs in the indicated BWP, otherwise the UE assumes that "tci-PresentInDCI" is enabled for all the CORESETs in the indicated BWP.

The TCI field in DCI format 1_2 is 0 bit in a case where a higher layer parameter "tci-PresentInDCI-1-2" is not configured, and is 1, 2, or 3 bits determined by the higher layer parameter "tci-PresentInDCI-1-2" in a case other than the case. If the BWP indicator field indicates a BWP other than an active BWP, the UE follows the following operation.
{Operation} If a higher layer parameter "tci-PresentInDCI-1-2" is not configured for a CORESET used for a PDCCH for communicating that DCI format 1_2, the UE assumes that "tci-PresentInDCI" is not enabled for all the CORESETs in the indicated BWP, otherwise the UE assumes that "tci-PresentInDCI-1-2" is configured with the same value as that of "tci-PresentInDCI-1-2" configured for the CORESET used for the PDCCH for communicating that DCI format 1_2, for all the CORESETs in the indicated BWP.

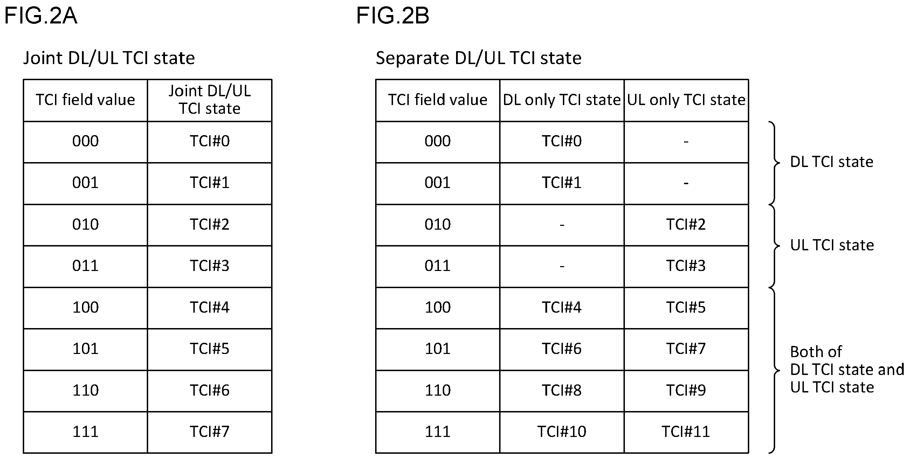

FIG. 2A shows an example of DCI-based joint DL/UL TCI state indication. A TCI state ID indicating a joint DL/UL TCI state is associated with a TCI field value for the joint DL/UL TCI state indication.

FIG. 2B shows an example of DCI-based separate DL/UL TCI state indication. At least one of a TCI state ID indicating a DL-only TCI state and a TCI state ID indicating a UL-only TCI state is associated with a TCI field value for the separate DL/UL TCI state indication. In this example, TCI field values "000" to "001" are associated with only one TCI state ID for DL, TCI field values "010" to "011" are associated with only one TCI state ID for UL, and TCI field values "100" to "111" are associated with both one TCI state ID for DL and one TCI state ID for UL.

### (Indicated TCI State/Configured TCI State)

For a Rel-17 TCI state, a unified/common TCI state may mean a Rel-17 TCI state indicated by using DCI/MAC CE/RRC (of Rel. 17) (indicated Rel-17 TCI state).

In the present disclosure, an indicated Rel-17 TCI state, an indicated TCI state, a unified/common TCI state, a TCI state applied to a plurality of types of signals (channels/RSs), and a TCI state for a plurality of types of signals (channels/RSs) may be interchangeably interpreted.

The indicated Rel-17 TCI state may be shared with at least one of UE-specific reception in a PDSCH/PDCC (updated by using DCI/MAC CE/RRC of Rel. 17), a dynamic grant (DCI)/configured grant PUSCH, and a plurality of (for example, all the) dedicated PUCCH resources. A TCI state indicated by DCI/MAC CE/RRC may be referred to as an indicated TCI state or a unified TCI state.

For the Rel-17 TCI state, a TCI state other than the unified TCI state may mean a Rel-17 TCI state configured by using a MAC CE/RRC (of Rel. 17) (configured Rel-17 TCI state). In the present disclosure, a configured Rel-17 TCI state, a configured TCI state, a TCI state other than a unified TCI state, and a TCI state applied to a signal (channel/RS) of a specific type may be interchangeably interpreted.

The configured Rel-17 TCI state may not be shared with at least one of UE-specific reception in a PDSCH/PDCC (updated by using DCI/MAC CE/RRC of Rel. 17), a dynamic grant (DCI)/configured grant PUSCH, and a plurality of (for example, all the) dedicated PUCCH resources. The configured Rel-17 TCI state may be configured by RRC/MAC CE for each CORESET/each resource/each resource set, and may not be updated even when the above-described indicated Rel-17 TCI state (common TCI state) is updated.

It is studied that an indicated Rel-17 TCI state is applied to a UE-specific channel/signal (RS). It is studied to notify the UE of which of an indicated Rel-17 TCI state and a configured Rel-17 TCI state is to be applied to a non-UE-specific channel/signal, by using higher layer signaling (RRC signaling).

It is studied that an RRC parameter related to a configured Rel-17 TCI state (TCI state ID) has the same configuration as that of an RRC parameter related to a TCI state in Rel. 15/16. It is studied that the configured Rel-17 TCI state is configured/indicated for each CORESET/each resource/each resource set by using RRC/MAC CE. It is studied that the UE judges the configuration/indication, based on a specific parameter.

It is studied that for the UE, update of an indicated TCI state and update of a configured TCI state are separately performed. For example, when a unified TCI state for the indicated TCI state is updated for the UE, the configured TCI state may not be updated. It is studied that the UE judges the update, based on a specific parameter.

It is studied that for a PDCCH/PDSCH, switching between application of an indicated Rel-17 TCI state and non-application of the indicated Rel-17 TCI state (application of a configured Rel-17 TCI state, application of a TCI state configured separately from the indicated Rel-17 TCI state) is performed by using higher layer signaling (RRC/MAC CE).

For intra-cell beam indication (TCI state indication), it is studied that an indicated Rel-17 TCI state is supported for a UE-specific CORESET and a PDSCH associated with the CORESET and for a non-UE-specific CORESET and a PDSCH associated with the CORESET.

For inter-cell beam indication (for example, L1/L2 inter-cell mobility), it is studied that an indicated Rel-17 TCI state is supported for a UE-specific CORESET and a PDSCH associated with the CORESET.

In Rel. 15, whether a TCI state is indicated for CORESET #0 depends on base station implementation. In Rel. 15, for CORESET #0 for which a TCI state is indicated, the indicated TCI state is applied. For CORESET #0 for which a TCI state is not indicated, an SSB and QCL selected in the latest (most recent) PRACH transmission are applied.

For a unified TCI state framework of Rel. 17 (or later versions), a TCI state related to CORESET #0 is under study.

For example, in the unified TCI state framework of Rel. 17 (or later versions), for Rel-17 TCI state indication for CORESET #0, whether to apply an indicated Rel-17 TCI state associated with a serving cell may be configured for each CORESET by RRC, and when the indicated Rel-17 TCI state is not applied, an existing MAC CE/RACH signaling mechanism (legacy MAC CE/RACH signalling mechanism) may be used.

Note that a CSI-RS associated with a Rel-17 TCI state applied to CORESET #0 may be QCLed with an SSB associated with a serving cell PCI (physical cell ID) (in a manner similar to that of Rel. 15).

For CORESET #0, a CORESET with a common search space (CSS), and a CORESET with a CSS and a UE-specific search space (USS), whether each CORESET follows an indicated Rel-17 TCI state may be configured by an RRC parameter. When the CORESET is not configured to follow the indicated Rel-17 TCI state, a configured Rel-17 TCI state may be applied to the CORESET.

For non-UE-dedicated channels/RSs (excluding CORESETs), whether each channel/resource/resource set follows an indicated Rel-17 TCI state may be configured by an RRC parameter. When the channel/resource/resource set is not configured to follow the indicated Rel-17 TCI state, a configured Rel-17 TCI state may be applied to the channel/resource/resource set.

### (PUSCH Repetition)

For Rel. 17, it is under study to introduce PUSCH repetition.

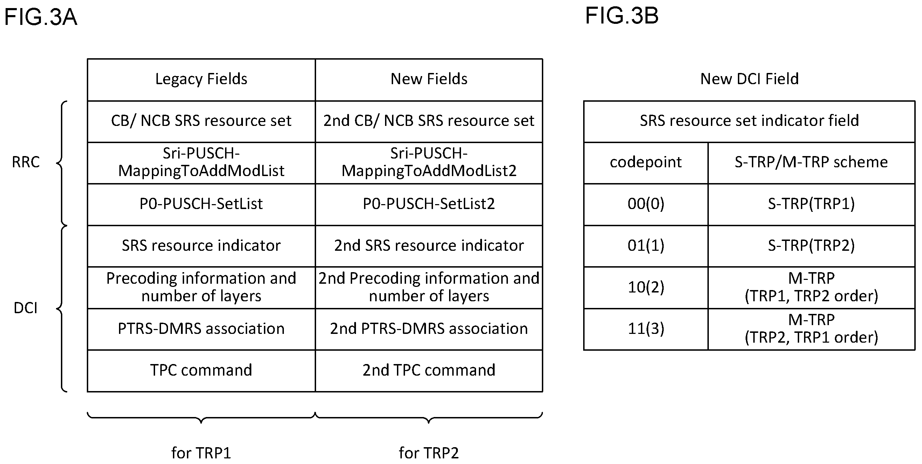

With reference to FIGS. 3A and 3B, an RRC field and a DCI field related to PUSCH repetition are described below.

Examples of such an RRC field related to PUSCH transmission defined in Rel. 16 or earlier versions includes a field related to an SRS resource set of codebook (CB)/non-codebook (NCB), a field related to mapping of an SRI and a PUSCH (power control) (sri-PUSCH-MappingToAddModList), and a field related to P0 of a PUSCH per SRI (p0-PUSCH-SetList).

Examples of such a DCI field related to PUSCH transmission defined in Rel. 16 or earlier versions includes an SRS resource indicator field, a field indicating precoding information and the number of layers, a field related to an association between a PTRS and a DMRS, and a TPC command field.

In Rel. 17, if two SRS resource sets of CB/NCB are configured, an SRS resource set indicator field is added in DCI format 0_1/0_2.

The SRS resource set indicator field has 2 bits. In a case where the SRS resource set indicator field indicates a codepoint "00 (0)," this indicates a single-TRP operation using a first TRP (TRP 1). In a case where the SRS resource set indicator field indicates a codepoint "01 (1)," this indicates a single-TRP operation using a second TRP (TRP 2). In a case where the SRS resource set indicator field indicates a codepoint "10 (2)," this indicates a multi-TRP operation of an order of the first TRP (TRP 1) and second TRP (TRP 2), in PUSCH repetition. In a case where the SRS resource set indicator field indicates a codepoint "11 (3)," this indicates a multi-TRP operation of an order of the second TRP (TRP 2) and first TRP (TRP 1), in PUSCH repetition (see FIG. 3B).

In a case where the SRS resource set indicator field is added in DCI format 0_1/0_2, a field related to mapping of a second SRI and a PUSCH (power control) (sri-PUSCH-MappingToAddModList2) and a field related to P0 of a PUSCH per second SRI (p0-PUSCH-SetList2) are added as new fields for RRC (see FIG. 3A). These fields are used as fields for the second TRP (TRP 2) and the existing fields described above are used as fields for the first TRP (TRP 1).

In a case where the SRS resource set indicator field is added in DCI format 0_1/0_2, a second SRS resource indicator field, a second field indicating precoding information and the number of layers, a second field related to an association between a PTRS and a DMRS, and a second TPC command field are added in the DCI format (see FIG. 3A). These fields are used as fields for the second TRP (TRP 2) and the existing fields described above are used as fields for the first TRP (TRP 1).

### (UL TCI State)

For NR in Rel. 16 or later versions, it is under study to use a UL TCI state, as a method of beam indication in UL. Notification of a UL TCI state is similar to notification of a DL beam (DL TCI state) of a UE. Note that a DL TCI state and a TCI state for a PDCCH/PDSCH may be interchangeably interpreted.

A channel/signal that a UL TCI state is configured (specified) for (which may be referred to as a target channel/RS) may be, for example, at least one of a PUSCH (a DMRS of the PUSCH), a PUCCH (a DMRS of the PUCCH), a random access channel (Physical Random Access Channel (PRACH)), an SRS, and the like.

An RS (source RS) to have a QCL relationship with such a channel/signal may be a DL RS (for example, SSB, CSI-RS, TRS, or the like) or may be a UL RS (for example, SRS, SRS for beam management, or the like), for example.

In a UL TCI state, such an RS to have a QCL relationship with the channel/signal may be associated with a panel ID for reception or transmission of the RS. Such association may be explicitly configured (or specified) by using higher layer signaling (for example, RRC signaling, a MAC CE, or the like) or may be implicitly judged.

A correspondence relation between an RS and a panel ID may be configured included in UL TCI state information or may be configured included in at least one of resource configuration information of the RS, spatial relation information, and the like.

A QCL type indicated with a UL TCI state may be any of existing QCL types A to D or may be another QCL type. The QCL type may include a certain spatial relation, a related antenna port (port index), and the like.

When a related panel ID is specified (for example, specified by DCI) for a UL transmission, a UE may perform the UL transmission by using a panel corresponding to the panel ID. A panel ID may be associated with a UL TCI state. In a case where a UL TCI state is specified (or activated) for a certain UL channel/signal, the UE may identify a panel to be used for transmission of the UL channel/signal in accordance with a panel ID associated with the UL TCI state.

### (Channel/RS to Which Indicated TCI State Is Applied)

An indicated TCI state with a MAC CE/DCI may be applied to the following channels/RSs.

### {PDCCH}

- When followUnifiedTCIState is configured (unified TCI state is configured to be followed) for CORESET 0, the indicated TCI state is applied to the CORESET. Otherwise, a Rel-15 specification is applied to the CORESET. In other words, CORESET 0 follows a TCI state activated by the MAC CE, or is QCLed with an SSB.
- The indicated TCI state is always applied to a CORESET with USS/CSS type 3 and with an index other than index 0.
- When a unified TCI state is configured to be followed for a CORESET with at least a CSS of a type other than CSS type 3 and with an index other than index 0, the indicated TCI state is applied to the CORESET. Otherwise, a configured TCI state for the CORESET is applied to the CORESET.

### {PDSCH}

- The indicated TCI state is always applied to all the UE-dedicated PDSCHs.
- When followUnifiedTCIState is configured for a non-UE-dedicated PDSCH (PDSCH scheduled by DCI in a CSS) (for a CORESET of a PDCCH for scheduling the PDSCH), the indicated TCI state may be applied to the PDSCH. Otherwise, a configured TCI state for the PDSCH is applied to the PDSCH. When followUnifiedTCIState is not configured for a PDSCH, whether a non-UE-dedicated PDSCH follows the indicated TCI state may be determined depending on whether followUnifiedTCIState is configured for a CORESET used to schedule the PDSCH.

### {CSI-RS}

- When followUnifiedTCIState is configured for an A-CSI-RS for CSI acquisition or beam management (for a CORESET of a PDCCH for triggering the A-CSI-RS), the indicated TCI state is applied to the A-CSI-RS. A configured TCI state for the CSI-RS is applied to another CSI-RS.

### {PUCCH}

- The indicated TCI state is always applied to all the dedicated PUCCH resources.

### {PUSCH}

- The indicated TCI state is always applied to a
   dynamic/configured grant PUSCH.

### {SRS}

- When a unified TCI state is configured to be followed for an SRS resource set for an A-SRS for beam management use and an A/SP/P-SRS for codebook (CB)/non-codebook (NCB)/antenna switching use, the indicated TCI state is applied to the SRS resource set. A configured TCI state in the SRS resource set is applied to another SRS.

### (Single-panel Transmission)

For a single-panel UL transmission or single-panel UL transmission scheme candidate, at least one of transmission schemes A and B (single-panel UL transmission schemes A and B) below may be applied. Note that, in the present disclosure, a panel / UE panel may be interpreted as a UE capability value set reported per UE capability. In the present disclosure, a different panel, a different spatial relation, a different joint TCI state, a different TPC parameter, a different antenna port, and the like may be interchangeably interpreted.

### <Transmission Scheme A: Single-panel Single-TRP UL Transmission>

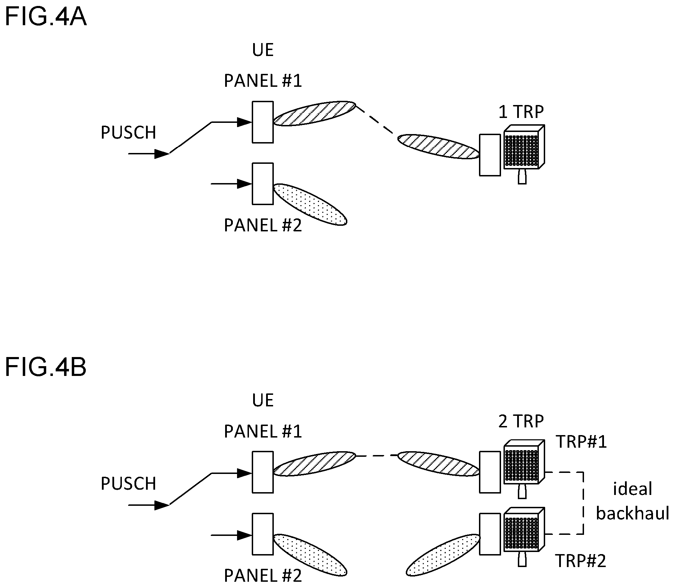

In Rel. 15 and Rel. 16, for a UE, a transmission scheme is used that, at one time point, UL is transmitted for one TRP from only one beam and panel (FIG. 4A).

### <Transmission Scheme B: Single-panel Multi-TRP UL Transmission>

For Rel. 17, it is under study that, at one time point, UL transmission from only one beam and panel is performed and the repetition transmission is performed for a plurality of TRPs (FIG. 4B). In an example of FIG. 4B, a UE transmits a PUSCH from panel #1 to TRP #1 and then (switches the beams and panels and) transmits a PUSCH from panel #2 to TRP #2. The two TRPs are connected to each other through ideal backhaul.

### (Multi-panel Transmission)

For Rel. 18 or later versions, in order to improve UL throughput/reliability, it is under study to support simultaneous UL transmission using a plurality of panels (for example, simultaneous multi-panel UL transmission (or STxMP)), for one or more TRPs. In addition, for a certain UL channel (for example, PUSCH/PUCCH) and the like, a multi-panel UL transmission scheme is under study.

For such multi-panel UL transmission, for example, up to X (for example, X = 2) and up to Y (for example, Y = 2) panels may be supported. Note that the values of X and Y are not limited to this. For the multi-panel UL transmission, in a case where UL precoding indication for a PUSCH is supported, a codebook of an existing system (for example, Rel. 16 or earlier versions) may be supported for multi-panel simultaneous transmission. Taking account of single-DCI-based and multi-DCI-based multi-TRP operations, the number of layers may be x (for example, x = 4) at maximum for all the panels and the number of codewords (CWs) may be y (for example, y = 2) at maximum for all the panels. Note that the values of x and y are not limited to this.

For a multi-panel UL transmission scheme or multi-panel UL transmission scheme candidate, at least one of the following schemes 1 to 3 (multi-panel UL transmission schemes 1 to 3) is under study. Only one of the transmission schemes 1 to 3 may be supported. A plurality of schemes including at least one of the transmission schemes 1 to 3 may be supported and one of the plurality of transmission schemes may be configured for a UE.

### <Transmission Scheme 1: Coherent Multi-panel UL Transmission>

A plurality of panels may be synchronized with each other. Layers are all mapped to every panel. A plurality of analog beams are indicated. An SRS resource indicator (SRI) field may be extended. With this scheme, up to four layers may be used for UL.

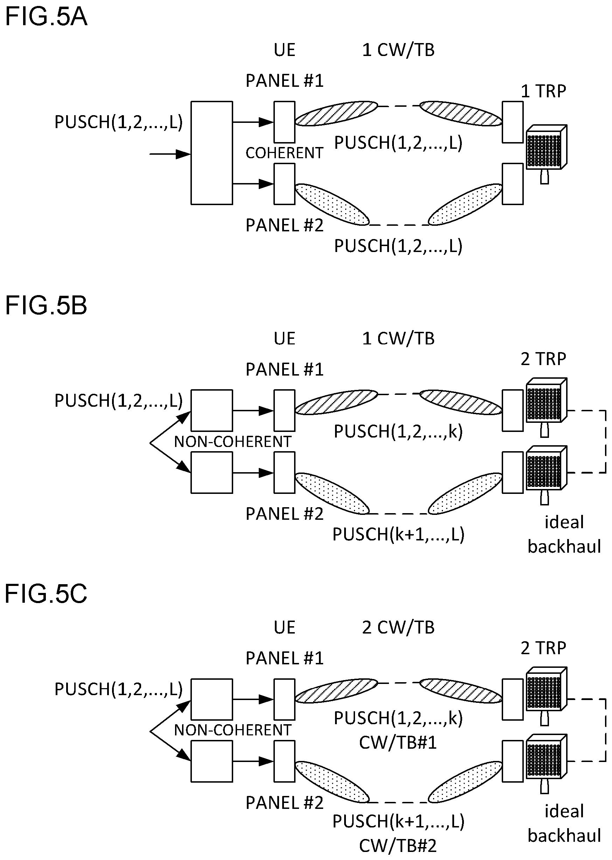

In an example of FIG. 5A, a UE maps one codeword (CW) or one transport block (TB) to L layers (PUSCHs (1, 2, ..., L)) and transmits the L layers from two panels each. Panel #1 and panel #2 are coherent with each other. Transmission scheme 1 allows gain due to diversity to be obtained. The total number of layers for the two panels is 2L. In a case where the maximum value of the total number of layers is 4, the maximum value of the number of layers in one panel is 2.

### <Transmission Scheme 2: Non-coherent Multi-panel UL Transmission of One Codeword (CW) or Transport Block (TB)>

A plurality of panels may not need to be synchronized with each other. Different layers are mapped to different panels and to one CW or TB for PUSCHs from the plurality of panels. Layers corresponding to one CW or TB may be mapped to the plurality of panels. With this transmission scheme, up to four layers or up to eight layers may be used for UL. In a case where up to eight layers are supported, this transmission scheme may support one CW or TB using up to eight layers.

In an example of FIG. 5B, a UE maps one CW or one TB to k layers (PUSCHs (1, 2, ..., k)) and L - k layers (PUSCHs (k + 1, k + 2, ..., L)), and transmits the k layers from panel #1 and transmits L - k layers from panel #2. Transmission scheme 2 allows gain due to multiplexing and diversity to be obtained. The total number of layers for the two panels is L.

### <Transmission Scheme 3: Non-coherent Multi-panel UL Transmission of two CWs or TBs>

A plurality of panels may not need to be synchronized with each other. Different layers are mapped to different panels and to two CWs or TBs for PUSCHs from the plurality of panels. Layers corresponding to one CW or TB may be mapped to one panel. Layers corresponding to a plurality of CWs or TBs may be mapped to different panels. With this transmission scheme, up to four layers or up to eight layers may be used for UL. In a case where up to eight layers are supported, this transmission scheme may support up to four layers per CW or TB.

In an example of FIG. 5C, a UE maps CW #1 or TB #1, out of two CWs or two TBs, to k layers (PUSCHs (1, 2, ..., k)) and maps CW #2 or TB #2 to L - k layers (PUSCHs (k + 1, k + 2, ..., L)), and transmits the k layers from panel #1 and transmits L - k layers from panel #2. Transmission scheme 3 allows gain due to multiplexing and diversity to be obtained. The total number of layers for the two panels is L.

In each transmission scheme described above, a base station may configure or indicate panel-specific transmission for UL transmission, by using a UL TCI or panel ID. The UL TCI (UL TCI state) may be based on signaling similar to DL beam indication supported in Rel. 15. The panel ID may be implicitly or explicitly applied to transmission of at least one of a target RS resource or target RS resource set, a PUCCH, an SRS, and a PRACH. In a case where the panel ID is explicitly notified, the panel ID may be configured in at least one of a target RS, a target channel, and a reference RS (for example, DL RS resource configuration or spatial relation information).

### (Simultaneous Multi-panel Transmission)

For Rel. 18 or later versions, for one or more of the transmission schemes/modes described above, multi-panel UL transmission (for example, simultaneous multi-panel transmission (Simultaneous Transmission across Multiple Panels (STxMP))) with respect to scheduling of a PUSCH based on a DCI (single DCI) / scheduling of a PUSCH based on a plurality of DCIs (multi-DCI) is under study.

For example, for Rel. 18, it is assumed to support the following STxMP:
- Single-DCI PUSCH SDM scheme
- Single-DCI PUSCH SFN scheme
- Single-DCI PUCCH SFN scheme
- Multi-DCI overlapping PUSCH + PUSCH scheme

### <Single-DCI-based STxMP>

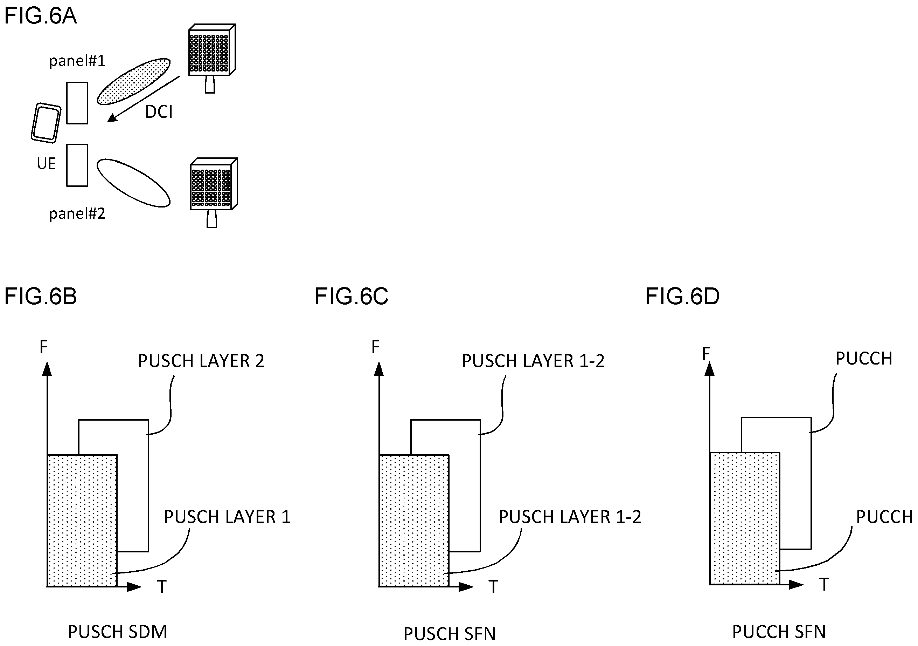

In Rel. 18 or later versions, a UE with a plurality of panels (for example, panel #1 and panel #2) may support simultaneous multi-panel transmission (STxMP) in a single-DCI-based multi-TRP system (see FIG. 6A). In single-DCI-based STxMP, the following scheme may be applied to UL transmission (for example, PUSCH,

### PUCCH, or PUSCH + PUCCH).

- Space division multiplexing (SDM) scheme (PUSCH): different layers / DMRS ports of one PUSCH are separately precoded and simultaneously transmitted from different UE panels/beams (see FIG. 6B).
- Single frequency network (SFN)-based transmission scheme (PUSCH): every layer / DMRS port of one PUSCH is simultaneously transmitted from two different UE panels/beams (see FIG. 6C).
- Single frequency network (SFN)-based transmission scheme (PUCCH): one PUCCH is simultaneously transmitted from different panels (see FIG. 6D).

FIG. 6B shows an example of a case where the single-DCI-based PUSCH SDM scheme is applied. A UE may assume that PUSCH repetition transmission applied with SDM is scheduled in the same time resource and the same frequency resource. In other words, in a case where a plurality of coherent panels are used, the UE may transmit, in the same time resource and the same frequency resource, PUSCH repetition transmission applied with SDM. In FIG. 6B, a case is shown that layer #1 and layer #2 corresponding to a PUSCH are the same in time and frequency resources.

FIG. 6B may be applied to a case where SDM is applied with respect to one CW (or TB) or may be applied to a case where SDM is applied with respect to two CWs (or TBs). In the case where SDM is applied with respect to two CWs, two CWs to be transmitted simultaneously from two different panels are spatially multiplexed.

FIG. 6C shows an example of a case where the single-DCI-based PUSCH SFN-based transmission scheme is applied. With SFN, a UE transmits the same signal, to the same RE, from panels corresponding to the respective different TCI states (for example, joint/UL TCI states). Here, all layers (for example, layers #1 and #2) / DMRS ports of one PUSCH are transmitted simultaneously from two different UE panels (for example, panel #1 and panel #2).

FIG. 6D shows an example of a case where the single-DCI-based PUCCH SFN-based transmission scheme is applied. Here, one PUCCH is transmitted simultaneously from different panels (for example, panel #1 and panel #2).

In the single-DCI-based PUSCH SDM scheme / SFN scheme, a plurality of (for example, two) SRS resource sets may be configured and a plurality of (for example, two) SRI fields / TPMI fields may be indicated.

In the single-DCI-based PUCCH SFN scheme, a plurality of (for example, two) TCI states may be applied with respect to one PUCCH resource.

### <Multi-DCI-based STxMP>

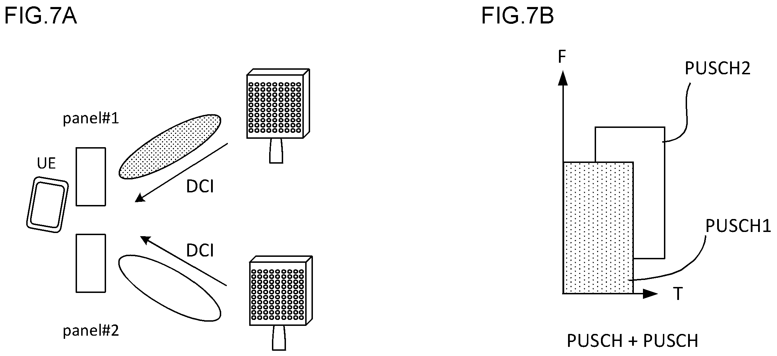

In Rel. 18 or later versions, a UE with a plurality of panels (for example, panel #1 and panel #2) may support simultaneous multi-panel transmission (STxMP) in a multi-DCI-based multi-TRP system (see FIG. 7A). In multi-DCI-based STxMP, simultaneous transmission of UL channels / UL signals (for example, PUSCH + PUSCH) may be supported (see FIG. 7B). For example, two PUSCHs having an overlap in the time domain are associated with different TRPs and transmitted simultaneously from different UE panels/beams.

A UE may simultaneously transmit, in the same active BWP, two independent PUSCHs associated with different TRPs. The total number of layers corresponding to such two independent PUSCHs may be defined to be X at maximum (or X or smaller). X may be, for example, 4 or may be another value. The maximum number of layers for each of the two PUSCHs may be X/2 (for example, 2) or may be another value. The two independent PUSCHs may be associated with different CORESET pool indices.

In the multi-DCI-based PUSCH + PUSCH, a plurality of (for example, two) SRS resource sets may be configured and the two SRS resource sets may be associated with the respective different (for example, two) CORESET pool indices.

In Rel. 18, as the multi-DCI-based STxMP, simultaneous transmission of PUSCHs (for example, PUSCH + PUSCH scheme) is supported. Moreover, for Rel. 19 or later versions, as the multi-DCI-based STxMP, it is assumed that simultaneous transmission for simultaneous transmission (for example, STxMP PUCCH + PUCCH, STxMP PUCCH + PUSCH) including an uplink control channel (for example, PUCCH) is supported.

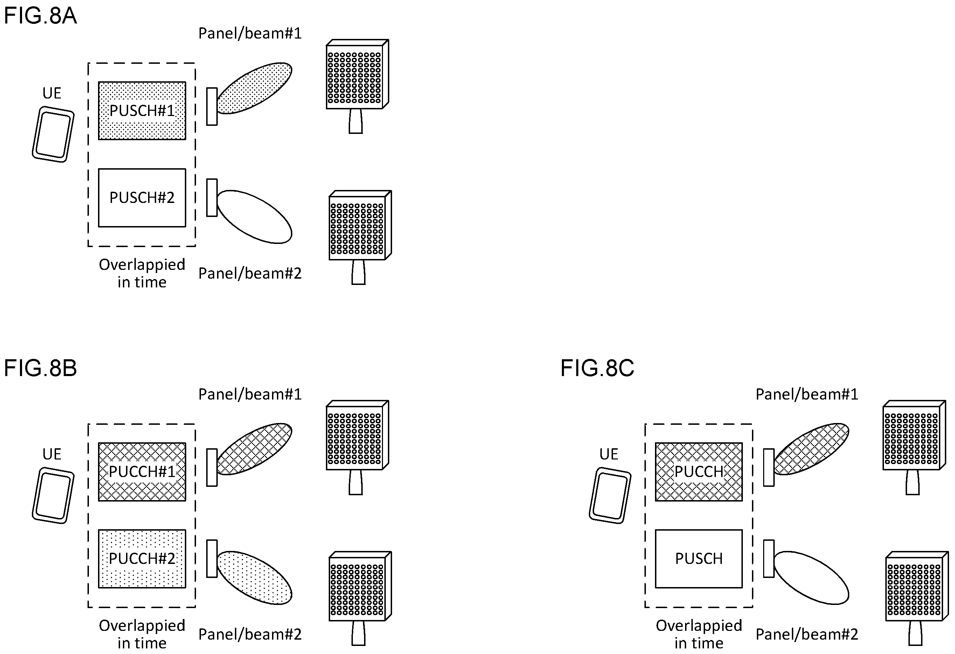

FIG. 8A shows an example of multi-DCI-based STxMP PUSCH + PUSCH. FIG. 8B shows an example of multi-DCI-based STxMP PUCCH + PUCCH. FIG. 8C shows an example of multi-DCI-based STxMP PUCCH + PUSCH.

With STxMP PUSCH + PUSCH (see FIG. 8A), two PUSCHs are associated with different TRPs and transmitted simultaneously from UE panels. The two PUSCHs may have a partial/full overlap in the time domain (partially/fully overlapping in time domain) and have a partial/full/no overlap in the frequency domain (partially/fully/non overlapping in frequency domain). A TRP may be interpreted as a panel, a CORESET pool index, an SRS resource set, an SSB group, a CSI-RS group, a TCI state, or a TCI state group.

With STxMP PUCCH + PUCCH (see FIG. 8B), two PUCCHs are associated with different TRPs and transmitted simultaneously from UE panels. The two PUCCHs may have a partial/full overlap in the time domain (partially/fully overlapping in time domain) and have a partial/full/no overlap in the frequency domain (partially/fully/non overlapping in frequency domain).

With STxMP PUCCH + PUSCH (see FIG. 8C), one PUCCH and one PUSCH are associated with different TRPs and transmitted simultaneously from UE panels. The one PUCCH and one PUSCH may have a partial/full overlap in the time domain (partially/fully overlapping in time domain) and have a partial/full/no overlap in the frequency domain (partially/fully/non overlapping in frequency domain).

In Rel. 17 or earlier versions (for example, STxMP PUCCH + PUCCH in FIG. 8B and STxMP PUCCH + PUSCH in FIG. 8C are not supported), a UE operation in order to solve an overlap between a PUCCH and another UL channel / UL signal (for example, between PUCCHs, between a PUCCH and a PUSCH) is supported.

For example, in a case where a PUCCH and another UL channel/signal have an overlap, a UE multiplexes UCI for a plurality of PUCCH transmissions to one PUCCH resource, multiplexes UCI for a PUCCH transmission to a PUSCH transmission, or drops a PUCCH/PUSCH transmission. Such a UL channel that the UCI is to be multiplexed / UL channel to be dropped may be determined based on a certain criterion (for example, UCI type, PUCCH/PUSCH priority index, or the like).

### (Analysis)

Meanwhile, for future radio communication systems (for example, Rel. 18 or later versions), it is under study to introduce/support a single-DCI-based SDM/SFN scheme for a configured grant (CG) PUSCH.

In the present disclosure, a CG PUSCH may include a CG PUSCH of a type (for example, type 1) based on a configuration of RRC signaling (for example, based only on a configuration of RRC signaling but not depending on any indication of DCI) and a CG PUSCH of a type (for example, type 2) based on a configuration of RRC signaling and an indication by DCI.

For example, in a case of type-1 CG PUSCH, it is under study that configurations related to two SRI fields (for example, srs-ResourceIndicator and srs-ResourceIndicator2) and configurations related to two TPMI fields (for example, precodingAndNumberOfLayers and precodingAndNumberOfLayers2) are included in configurations related to a CG (CG configurations with RRC signaling (configuredGrantConfig)).

For TDM PUSCH repetition using multi-TRP in Rel. 17, in a case of type-1 CG PUSCH, configurations related to two SRI fields (for example, srs-ResourceIndicator and srs-ResourceIndicator2) and configurations related to two TPMI fields (for example, precodingAndNumberOfLayers and precodingAndNumberOfLayers2) are included in configurations related to a CG (CG configurations with RRC signaling (configuredGrantConfig)).

For TDM PUSCH repetition using multi-TRP in Rel. 17, when two SRS resource sets are configured and only one SRI/TPMI field is configured in the CG configuration (configuredGrantConfig), a PUSCH is associated with a first SRS resource set.

In contrast, for a unified TCI state for multi-TRP defined in Rel. 18, in a case of type-1 CG PUSCH, it is under study that which of a first, second, or both TCI states is/are to be applied with respect to a corresponding CG PUSCH is configured for a UE by using RRC signaling.

However, studied have not sufficiently been made on a configuration related to a PUSCH for at least one of (1) a case where Rel-17 multi-TRP TDM PUSCH repetition is configured or Rel-18 STxMP SDM/SFN PUSCH is configured and (2) a case where application of one indicated TCI state (for example, first TCI state or second TCI state) with respect to a CG PUSCH (for example, type-1 CG PUSCH) is configured for a UE by using RRC signaling.

For example, for at least one of (1) and (2) described above, studies have not sufficiently been made on which SRS resource set is to be associated with a PUSCH.

For example, for at least one of (1) and (2) described above, studies have not sufficiently been made on whether a plurality of (for example, two) SRI/TPMI fields are possible to be configured in the CG configuration and which SRI/TPMI field is to be applied in a case where a plurality of (for example, two) SRI/TPMI fields are configured in the CG configuration.

Further, studies have not sufficiently been made on, when application of a plurality of (for example, two/both) indicated TCI states with respect to a CG PUSCH (for example, type-1 CG PUSCH) is configured for a UE by using RRC signaling, whether one SRI/TPMI field is possible to be configured in the CG configuration.

If these studies are not sufficiently made, an operation related to multi-TRP and STxMP may not be appropriately performed, causing an increase in communication throughput to be suppressed.

In view of this, the inventors of the present invention came up with the idea of the present embodiment in order to solve issues described above. Note that the present embodiment may be applied not limited to STxMP of a PUSCH (for example, CG PUSCH) related to single-DCI.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate (or specify), select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a UE capability value set, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, an SSB group, a CSI-RS group, a CORESET group, a Physical Uplink Control Channel (PUCCH) group, a PUCCH resource group, a TCI state group), a resource (for example, a reference signal resource, an SRS resource), a resource set (for example, a reference signal resource set, an SRS resource set), a CORESET pool, a CORESET pool index, a TCI state, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

A spatial relation information Identifier (ID) (TCI state ID) and spatial relation information (TCI state) may be interchangeably interpreted. "Spatial relation information" may be interchangeably interpreted as "a set of spatial relation information," "one or a plurality of pieces of spatial relation information," or the like. The TCI state and the TCI may be interchangeably interpreted.

A panel Identifier (ID) and a panel may be interchangeably interpreted. In other words, a TRP ID and a TRP, a CORESET group ID and a CORESET group, and the like may be interchangeably interpreted.

In the present disclosure, a TRP, a transmission point, a panel, a DMRS port group, a CORESET pool, and one of two TCI states associated with one codepoint of a TCI field may be interchangeably interpreted.

In the present disclosure, transmission/reception of a channel/signal using a single TRP may be interpreted as TCI states (joint/separate/indicated TCI states) being equal in transmission/reception of the channel/signal (for example, NCJT/CJT/repetition) or the number of TCI states (joint/separate/indicated TCI states) being one in transmission/reception of the channel/signal (for example, NCJT/CJT/repetition).

Transmission/reception of a channel/signal using a single TRP may be interpreted as TCI states (joint/separate/indicated TCI states) being different in transmission/reception of the channel/signal (for example, NCJT/CJT/repetition) or the number of different TCI states (joint/separate/indicated TCI states) being more than one (for example, two) in transmission/reception of the channel/signal (for example, NCJT/CJT/repetition).

In the present disclosure, a single TRP, a single-TRP system, single-TRP transmission, and a single PDSCH may be interchangeably interpreted. In the present disclosure, multi-TRP (a plurality of TRPs), a multi-TRP system, multi-TRP transmission, and multi-PDSCH may be interchangeably interpreted.

In the present disclosure, single DCI, a single PDCCH, multi-TRP based on single DCI, two TCI states in at least one TCI codepoint being activated, at least one codepoint of a TCI field being mapped to two TCI states, a specific index (for example, a TRP index, a CORESET pool index, or an index corresponding to a TRP) being configured for a specific channel/CORESET may be interchangeably interpreted.

In the present disclosure, a single TRP, a channel/signal using a single TRP, a channel using one TCI state/spatial relation, multi-TRP being not enabled by RRC/DCI, a plurality of TCI states/spatial relations being not enabled by RRC/DCI, and one CORESET pool index (CORESETPoolIndex) value being not configured for any CORESET and any codepoint of a TCI field being not mapped to two TCI states may be interchangeably interpreted.

In the present disclosure, multi-TRP, a channel/signal using multi-TRP, a channel using a plurality of TCI states/spatial relations, multi-TRP being enabled by RRC/DCI, a plurality of TCI states/spatial relations being enabled by RRC/DCI, and at least one of multi-TRP based on single DCI and multi-TRP based on multi-DCI may be interchangeably interpreted.

In the present disclosure, multi-TRP based on multi-DCI (multi-DCI-based multi-TRP), multi-DCI multi-TRP, one CORESET pool index (CORESETPoolIndex) value being configured for a CORESET, and a plurality of specific indices (for example, TRP indices, CORESET pool indices, or indices corresponding to TRPs) being configured for a specific channel/CORESET may be interchangeably interpreted.

In the present disclosure, TRP #1 (first TRP) may correspond to CORESET pool index = 0 or may correspond to the first TCI state of two TCI states corresponding to one codepoint of a TCI field. TRP #2 (second TRP) TRP #1 (first TRP) may correspond to CORESET pool index = 1 or may correspond to the second TCI state of two TCI states corresponding to one codepoint of a TCI field.

In the present disclosure, single DCI (sDCI), a single PDCCH, a multi-TRP system based on single DCI, sDCI-based MTRP, and two TCI states in at least one TCI codepoint being activated may be interchangeably interpreted.

In the present disclosure, multi-DCI (mDCI), multi-PDCCH, a multi-TRP system based on multi-DCI, mDCI-based MTRP, and two CORESET pool indices or CORESET pool index = 1 (or a value equal to one or greater) being configured may be interchangeably interpreted.

In the present disclosure, beam indication DCI, a beam indication MAC CE, and beam indication DCI/MAC CE may be interchangeably interpreted. In other words, indication related to an indicated TCI state for a UE may be performed by using at least one of DCI and a MAC CE.

In the present disclosure, a channel, a signal, and a channel/signal may be interchangeably interpreted. In the present disclosure, a DL channel, a DL signal, a DL signal/channel, transmission/reception of a DL signal/channel, DL reception, and DL transmission may be interchangeably interpreted. In the present disclosure, a UL channel, a UL signal, a UL signal/channel, transmission/reception of a UL signal/channel, UL reception, and UL transmission may be interchangeably interpreted.

In the present disclosure, applying a TCI state/QCL assumption to each channel/signal/resource may mean applying a TCI state/QCL assumption to transmission/reception of each channel/signal/resource.

In the present disclosure, a first TCI state (TCI state indicated first) may correspond to a first TRP. In the present disclosure, a second TCI state (TCI state indicated second) may correspond to a second TRP. In the present disclosure, an n-th TCI state (TCI state indicated n-th) may correspond to an n-th TRP.

In the present disclosure, the value of a first CORESET pool index (for example, 0), the value of a first TRP index (for example, 1), and a first TCI state (first DL/UL (joint/separate) TCI state) may correspond to each other. In the present disclosure, the value of a second CORESET pool index (for example, 1), the value of a second TRP index (for example, 2), and a second TCI state (second DL/UL (joint/separate) TCI state) may correspond to each other.

In the present disclosure, transmission, scheduling, mapping, multiplexing, configuration, and the like may be interchangeably interpreted.

Note that, in each of the embodiments of the present disclosure below, description will be mainly given of a method targeting two TRPs for application of a plurality of TCI states in transmission/reception using a plurality of TRPs (in other words, a case where at least one of N and M is 2). However, the number of TRPs may be three or more (more than one), and each embodiment may be applied in accordance with the number of TRPs. In other words, at least one of N and M may be a number larger than 2.

### (Radio Communication Method)

In the following, although description is made taking single-DCI-based multi-TRP as an example, application of the present embodiment is not limited to this. The present embodiment may be applied to a case where UL channels/signals have an overlap in the time domain.

In the present disclosure, for a TRP/panel, a CORESET pool index, an SRS resource set, an SSB group, a CSI-RS group, a TCI state, or a TCI state group may be referenced.

In the following, although description is made taking a case where two TRPs are configured in one cell/CC (or case where two TRPs are associated with one cell/CC) as an example, cases that the present embodiment is applicable to are not limited to this. The number of TRPs may be three or greater. The present embodiment may be applied to a case where two TRPs corresponding to the respective different cells are configured (or case where a plurality of (for example, two) cells/CCs are associated with the respective TRPs).

In each embodiment of the present disclosure, a first SRI field, a configuration related to a first SRI field, and an RRC parameter "srs-ResourceIndicator" may be interchangeably interpreted.

In each embodiment of the present disclosure, a second SRI field, a configuration related to a second SRI field, and an RRC parameter "srs-ResourceIndicator2" may be interchangeably interpreted.

In each embodiment of the present disclosure, a first TPMI field, a configuration related to a first TPMI field, a first precoding and number of layers field, a configuration related to a first precoding and number of layers field, and an RRC parameter "precodingAndNumberOfLayers" may be interchangeably interpreted.

In each embodiment of the present disclosure, a second TPMI field, a configuration related to a second TPMI field, a second precoding and number of layers field, a configuration related to a second precoding and number of layers field, and an RRC parameter "precodingAndNumberOfLayers2" may be interchangeably interpreted.

In each embodiment of the present disclosure, a first SRS resource set may mean an SRS resource set with a lower (or higher) ID.

In each embodiment of the present disclosure, a second SRS resource set may mean an SRS resource set with a higher (or lower) ID.

A UE may receive a CG configuration (for example, "configuredGrantConfig") by using RRC signaling.

The UE may receive a configuration related to an indicated TCI state to be applied to channels/signals (for example, "applyIndicatedTCIState").

The UE may perform at least one of assumption, based on the configuration related to an indicated TCI state to be applied to channels/signals, of a configuration related to an SRI field / TPMI included in the CG configuration and judgement of an association between a CG PUSCH related to the CG configuration and an SRS resource set.

### <First Embodiment>

A first embodiment may be applied based on Assumption 1 described below.

### {Assumption 1}

- Time-division-multiplexed (TDMed) PUSCH repetition using multi-TRP is configured or PUSCH repetition of space division multiplexing (SDM) / single frequency network (SFN) related to simultaneous transmission using a plurality of panels (STxMP) is configured.
- For a UE, a unified TCI state configuration parameter (for example, an RRC parameter "dl-OrJointTCI-StateList/TCI-UL-State") having a plurality of (for example, two) TCI states (for example, an RRC parameter "TCI-States/TCI-UL-States") is configured.

In the present disclosure, TDMed PUSCH repetition using multi-TRP may be referred to as, for example, multi-TRP TDM PUSCH repetition defined in Rel. 17.

In the present disclosure, a case that TDMed PUSCH repetition using multi-TRP is configured may mean that a plurality of (for example, two) codebook (CB) / non-codebook (NCB) SRS resource sets (SRS resource sets configured with CB/NCB usage) are configured.

In the present disclosure, PUSCH repetition of SDM/SFN related to STxMP may be referred to as, for example, STxMP SDM/SFN PUSCH repetition defined in Rel. 18.

In the present disclosure, a case that PUSCH repetition of SDM/SFN related to STxMP is configured may mean that a plurality of CB/NCB SRS resource sets are configured and a scheme using a plurality of panels (for example, an RRC parameter "multipanelScheme") is configured to an SDM scheme (for example, an RRC parameter "SDMScheme") or SFN scheme (for example, an RRC parameter "SFNScheme").

The UE may be provided/configured with an RRC parameter indicating that one indicated TCI state is applied to a CG PUSCH (for example, type-1 CG PUSCH).

For example, such an RRC parameter (for example, "applyIndicatedTCIState") may indicate any one of a first indicated TCI state (for example, "first"), a second indicated TCI state (for example, "second"), or both the first and second indicated TCI states (for example "both"). The present embodiment may be applied to a case where the RRC parameter indicates either the first indicated TCI state (for example, "first") or second indicated TCI state (for example, "second").

### <<Embodiment 1-1>>

The UE may assume/expect that a specific (for example, only one) SRI field / TPMI field is present in the CG configuration.

In other words, in the CG configuration, another (or different) SRI field / TPMI field may be absent.

For example, such a specific SRI field / TPMI field in the CG configuration may be a first (or second) SRI field / TPMI field (Embodiment 1-1-1). In this, in the CG configuration, the second (or first) SRI field / TPMI field may be absent.

The UE may assume/judge the SRI field / TPMI field in the CG configuration, based on the RRC parameter (for example, "applyIndicatedTCIState") related to application of an indicated TCI state (or based on an indicated TCI state to be applied by the UE) (Embodiment 1-1-2).

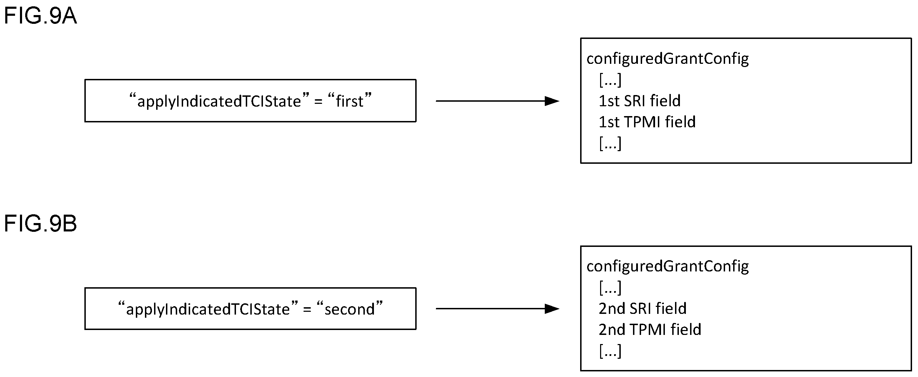

For example, in a case where the UE applies a first indicated TCI state (case where "applyIndicatedTCIState" indicates "first"), the UE may assume/judge that the first SRI field / TPMI field is configured/provided in the CG configuration and assume/judge that the second SRI field / TPMI field is absent in the CG configuration (see FIG. 9A).

For example, in a case where the UE applies a second indicated TCI state (case where "applyIndicatedTCIState" indicates "second"), the UE may assume/judge that the second SRI field / TPMI field is configured/provided in the CG configuration and assume/judge that the first SRI field / TPMI field is absent in the CG configuration (see FIG. 9B).

According to Embodiment 1-1, a UE operation can be defined simply, allowing appropriate configuration related to a CG PUSCH to be made while reducing the cost.

### <<Embodiment 1-2>>

The UE may assume/expect that a plurality of (for example, two) SRI fields / TPMI fields are configured/provided in the CG configuration.

The UE may judge that a specific (for example, first or second) SRI field / TPMI field, out of the plurality of SRI fields / TPMI fields, is applied/used (Embodiment 1-2-1).

The UE may judge application/use of the SRI field / TPMI field in the CG configuration, based on the RRC parameter (for example, "applyIndicatedTCIState") related to application of an indicated TCI state (or based on an indicated TCI state to be applied by the UE) (Embodiment 1-2-2).

For example, in a case where the UE applies the first indicated TCI state (case where "applyIndicatedTCIState" indicates "first"), the UE may judge that the first SRI field / TPMI field in the CG configuration is applied/used.

For example, in a case where the UE applies the second indicated TCI state (case where "applyIndicatedTCIState" indicates "second"), the UE may judge that the second SRI field / TPMI field in the CG configuration is applied/used.

According to Embodiment 1-2, a UE operation can be defined more flexibly, allowing appropriate configuration related to a CG PUSCH to be made.

### <<Embodiment 1-3>>

A CG PUSCH may be associated with a specific SRS resource set. A UE may assume/judge that a CG PUSCH is associated with a specific SRS resource set.

For example, the UE may judge/assume that a CG PUSCH is associated with a first (or second) SRS resource set (Embodiment 1-3-1).

The UE may judge an SRS resource set to be associated with a CG PUSCH, based on the RRC parameter (for example, "applyIndicatedTCIState") related to application of an indicated TCI state (or based on an indicated TCI state to be applied by the UE) (Embodiment 1-3-2).

For example, in a case where the UE applies the first indicated TCI state (case where "applyIndicatedTCIState" indicates "first"), the UE may judge that the CG PUSCH is associated with the first SRS resource set.

For example, in a case where the UE applies the second indicated TCI state (case where "applyIndicatedTCIState" indicates "second"), the UE may judge that the CG PUSCH is associated with the second SRS resource set.

In Embodiment 1-1/1-2/1-3 described above, the UE may judge an SRS resource set to be associated with a CG PUSCH, based on the CG configuration (for example, "configuredGrantConfig") (Embodiment 1-3-3). The UE may judge, based on the CG configuration, which of the first SRS resource set or second SRS resource set is to be associated with the CG PUSCH.

For example, in a case where the UE applies the first indicated TCI state (case where "applyIndicatedTCIState" indicates "first"), the UE may judge that the CG PUSCH is configured/provided associated with the first SRS resource set by using RRC signaling.

For example, in a case where the UE applies the second indicated TCI state (case where "applyIndicatedTCIState" indicates "second"), the UE may judge that the CG PUSCH is configured/provided associated with the second SRS resource set by using RRC signaling.

According to Embodiment 1-3, an SRS resource set to be associated with a PUSCH can be appropriately determined.

### <Second Embodiment>

A second embodiment may be applied based on Assumption 1 described above.

A UE may be provided/configured with an RRC parameter indicating that a plurality of (for example, two/both) indicated TCI states are applied to a CG PUSCH (for example, type-1 CG PUSCH).

Such an RRC parameter (for example, "applyIndicatedTCIState") may indicate any one of a first indicated TCI state (for example, "first"), a second indicated TCI state (for example, "second"), or both the first and second indicated TCI states (for example "both"). The present embodiment may be applied to a case where the RRC parameter indicates application of both the first and second indicated TCI states (for example, "both").

### <<Embodiment 2-1>>

The UE may assume/expect that a plurality of (for example, two) SRI fields / TPMI fields are present in the CG configuration.

According to Embodiment 2-1, a UE operation can be defined simply, allowing appropriate configuration related to a CG PUSCH to be made while reducing the cost.

### <<Embodiment 2-2>>

The UE may assume/expect that a specific (for example, one) SRI field / TPMI field is configured/provided in the CG configuration.

The UE may judge that the first (or second) indicated TCI state is to be applied (Embodiment 2-2-1).

The UE may judge an indicated TCI state to be applied, based on the SRI field / TPMI field in the CG configuration (Embodiment 2-2-2).

For example, in a case where the first SRI field / TPMI field is provided/configured and the second SRI field / TPMI field is absent, the UE may apply the first indicated TCI state to the CG PUSCH. In this, the UE may assume/judge that a first SRS resource set is associated with the PUSCH.

For example, in a case where the second SRI field / TPMI field is provided/configured and the first SRI field / TPMI field is absent, the UE may apply the second indicated TCI state to the CG PUSCH. In this, the UE may assume/judge that a second SRS resource set is associated with the PUSCH.

In at least one of Embodiments 2-1 and 2-2 described above, the UE may judge an SRS resource set to be associated with a CG PUSCH, based on the CG configuration (for example, "configuredGrantConfig"), and judge an indicated TCI state to be applied to the PUSCH (Embodiment 2-2-3). In the CG configuration, which of the first SRS resource set or second SRS resource set is to be associated with the CG PUSCH may be configured.

For example, in a case where the first SRS resource set is associated with the PUSCH, the UE may judge that the first indicated TCI state is to be applied.

For example, in a case where the second SRS resource set is associated with the PUSCH, the UE may judge that the second indicated TCI state is to be applied.

According to Embodiment 2-2, a UE operation can be defined more flexibly, allowing appropriate configuration related to a CG PUSCH to be made.

### <Supplements>

### {Notification of Information to UE}

Any notification of information (from a network (NW) (for example, a base station (BS))) to a UE (in other words, any reception, in a UE, of information from a BS) in the above-described embodiments may be performed by using physical layer signaling (for example, DCI), higher layer signaling (for example, RRC signaling, a MAC CE), a specific signal/channel (for example, a PDCCH, a PDSCH, a reference signal), or any combination of them.

In a case where the notification described above is performed by a MAC CE, the MAC CE may be identified by a new logical channel ID (LCID) being included in a MAC sub-header, the new LCID being not defined in any existing specification.

In a case where the notification is performed by DCI, the notification may be performed by using a specific field of the DCI, a radio network temporary identifier (RNTI) used to scramble a cyclic redundancy check (CRC) bit attached to the DCI, a format of the DCI, or the like.

Any notification of information to a UE in the above-described embodiments may be performed periodically, semi-persistently, or aperiodically.

### {Notification of Information from UE}

Any notification of information from a UE (to a NW) (in other words, any transmission/reporting, by a UE, of information to a BS) in the above-described embodiments may be performed by using physical layer signaling (for example, UCI), higher layer signaling (for example, RRC signaling, a MAC CE), a specific signal/channel (for example, a PUCCH, a PUSCH, a PRACH, a reference signal), or any combination of them.

In a case where the notification described above is performed by a MAC CE, the MAC CE may be identified by a new LCID being included in a MAC sub-header, the new LCID being not defined in any existing specification.

In a case where the notification is performed by UCI, the notification may be transmitted by using a PUCCH or a PUSCH.

Any notification of information from a UE in the above-described embodiments may be performed periodically, semi-persistently, or aperiodically.

### {Application of Respective Embodiments}

At least one of the above-described embodiments may be applied to a case where a specific condition is satisfied. The specific condition may be defined in a specification, or a UE/BS may be notified of the specific condition by using higher layer signaling / physical layer signaling.

At least one of the above-described embodiments may be applied only to a UE that has reported a specific UE capability or that supports the specific UE capability.

The specific UE capability may indicate at least one of the following:
- supporting of specific processing/operation/control/information (for example, STxMP) for at least one of the above-described embodiments
- supporting of multi-TRP TDM PUSCH repetition (defined in Rel. 17)
- supporting of STxMP SDM/SFN PUSCH repetition (defined in Rel. 18)
- supporting of a unified TCI state for multi-TRP (defined in Rel. 18)

The specific UE capability described above may be capability applied across all the frequencies (commonly irrespective of frequencies), capability per frequency (for example, one or any combination of a cell, a band, a band combination, a BWP, a component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one embodiment of the above-described embodiments may be applied to a case where specific information associated with the embodiment (or performance of an operation for the embodiment) is configured/activated/triggered for a UE by using higher layer signaling / physical layer signaling. For example, the specific information may be information indicating enablement of multi-TRP TDM PUSCH repetition (defined in Rel. 17), information indicating enablement of STxMP SDM/SFN PUSCH repetition (defined in Rel. 18), information indicating enablement of a unified TCI state for multi-TRP (defined in Rel. 18), any RRC parameter for a specific release (for example, Rel. 18/19), or the like.

In a case where a UE does not support at least one of the specific UE capabilities or is not configured with the specific information, the UE may apply Rel-15/16 operation, for example.

### (Supplementary Notes)

Regarding one embodiment of the present disclosure, the following supplementary notes of the invention will be given.

### {Supplementary Note 1}

A terminal including: a receiving section that receives a first configuration related to a configured grant physical uplink shared channel (CG PUSCH) and a second configuration related to application of an indicated Transmission Configuration Indication (TCI) state; and a control section that performs at least one of assumption, based on the second configuration, of a configuration related to a sounding reference signal resource indicator (SRI) field included in the first configuration and a configuration related to a precoding and number of layers field included in the first configuration and judgement, based on the second configuration, of an association between a CG PUSCH related to the first configuration and a sounding reference signal (SRS) resource set.

### {Supplementary Note 2}

The terminal according to supplementary note 1, wherein the control section assumes, when the second configuration indicates application of one indicated TCI state, that a configuration related to one or a plurality of the SRI fields and a configuration related to one or a plurality of the precoding and number of layers fields are included in the first configuration.

### {Supplementary Note 3}

The terminal according to supplementary note 1 or 2, wherein the control section judges, when the second configuration indicates a first indicated TCI state, that the CG PUSCH related to the first configuration is associated with a first SRS resource set, and
the control section judges, when the second configuration indicates a second indicated TCI state, that the CG PUSCH related to the first configuration is associated with a second SRS resource set.

### {Supplementary Note 4}

The terminal according to any one of supplementary notes 1 to 3, wherein the control section assumes, when the second configuration indicates application of a plurality of indicated TCI states, that a configuration related to one or a plurality of the SRI fields and a configuration related to one or a plurality of the precoding and number of layers fields are included in the first configuration.

### (Radio Communication System)

Hereinafter, a structure of a radio communication system according to one embodiment of the present disclosure will be described. In this radio communication system, the radio communication method according to each embodiment described above of the present disclosure may be used alone or may be used in combination for communication.

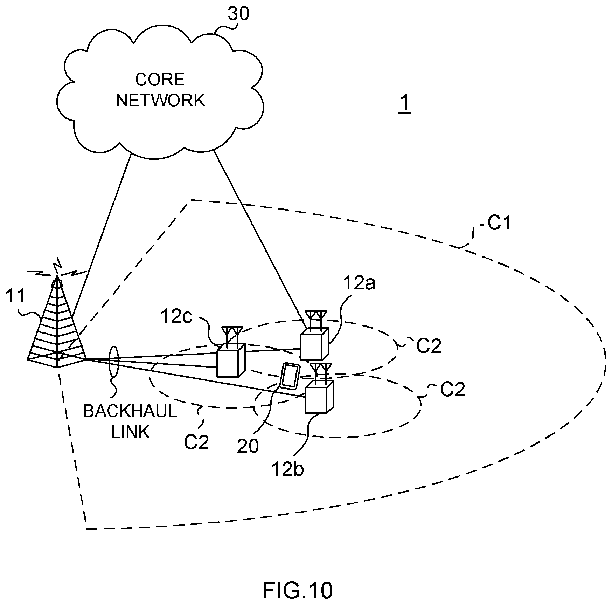

FIG. 10 is a diagram to show an example of a schematic structure of the radio communication system according to one embodiment. The radio communication system 1 (which may be simply referred to as a system 1) may be a system implementing communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or lower (sub-6 GHz), and FR2 may be a frequency band higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data" and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

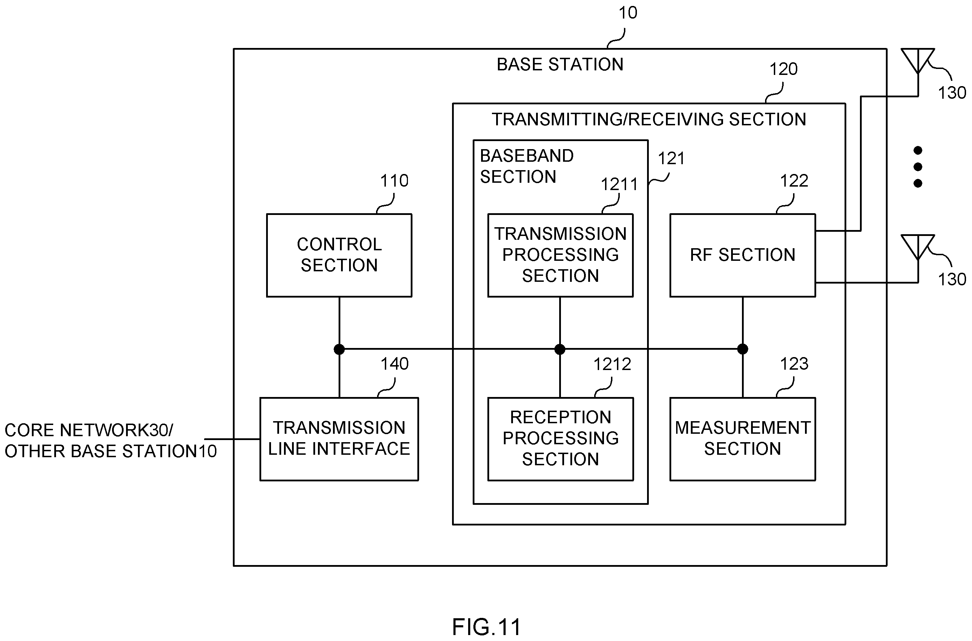

FIG. 11 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit a first configuration related to a configured grant physical uplink shared channel (CG PUSCH) and a second configuration related to application of an indicated Transmission Configuration Indication (TCI) state. The control section 110 may perform at least one of determination, based on the second configuration, of a configuration related to a sounding reference signal resource indicator (SRI) field included in the first configuration and a configuration related to a precoding and number of layers field included in the first configuration and indication, using the second configuration, of an association between a CG PUSCH related to the first configuration and a sounding reference signal (SRS) resource set (the first/second embodiment).

### (User Terminal)

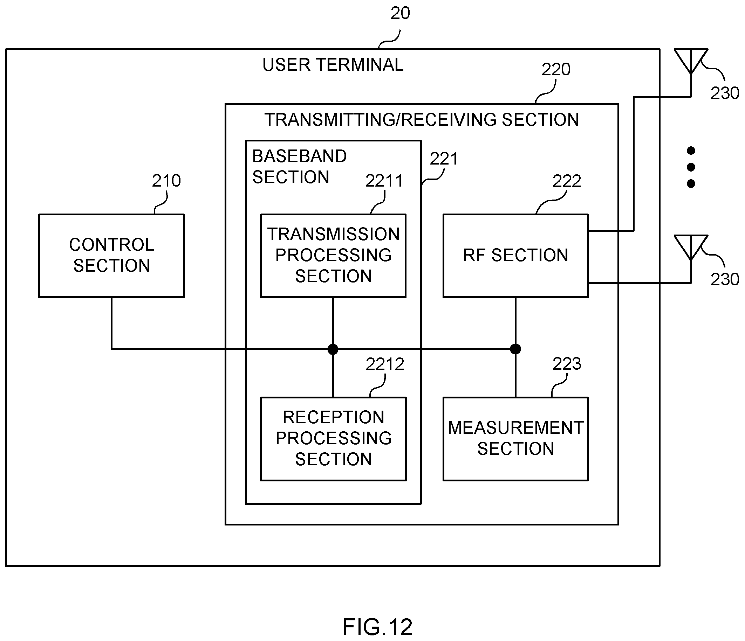

FIG. 12 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the

### transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a first configuration related to a configured grant physical uplink shared channel (CG PUSCH) and a second configuration related to application of an indicated Transmission Configuration Indication (TCI) state. The control section 210 may perform at least one of assumption, based on the second configuration, of a configuration related to a sounding reference signal resource indicator (SRI) field included in the first configuration and a configuration related to a precoding and number of layers field included in the first configuration and judgement, based on the second configuration, of an association between a CG PUSCH related to the first configuration and a sounding reference signal (SRS) resource set (the first/second embodiment).

When the second configuration indicates application of one indicated TCI state, the control section 210 may assume that a configuration related to one or a plurality of the SRI fields and a configuration related to one or a plurality of the precoding and number of layers fields are included in the first configuration (the first embodiment).

When the second configuration indicates a first indicated TCI state, the control section 210 may judge that the CG PUSCH related to the first configuration is associated with a first SRS resource set. When the second configuration indicates a second indicated TCI state, the control section 210 may judge that the CG PUSCH related to the first configuration is associated with a second SRS resource set (the first embodiment).

When the second configuration indicates application of a plurality of indicated TCI states, the control section 210 may assume that a configuration related to one or a plurality of the SRI fields and a configuration related to one or a plurality of the precoding and number of layers fields are included in the first configuration (the second embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

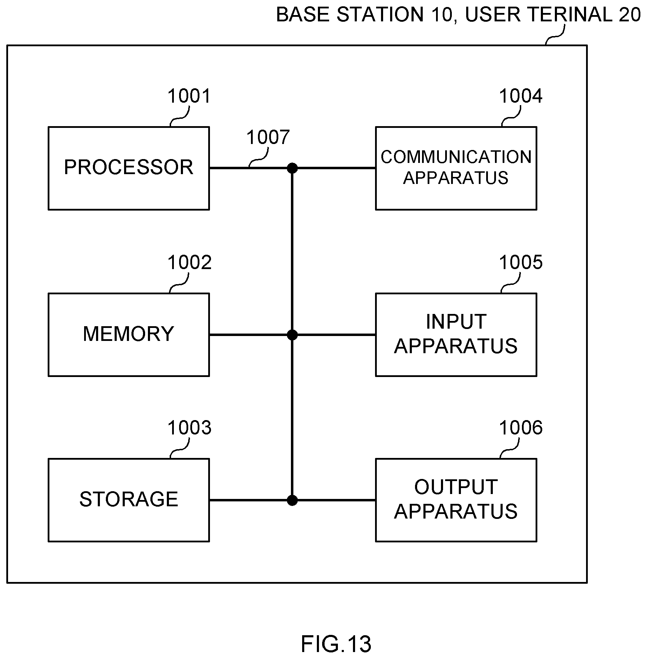

For example, a base station, a user terminal, and so on according to one embodiment of the present disclosure may function as a computer that executes the processes of the radio communication method of the present disclosure. FIG. 13 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

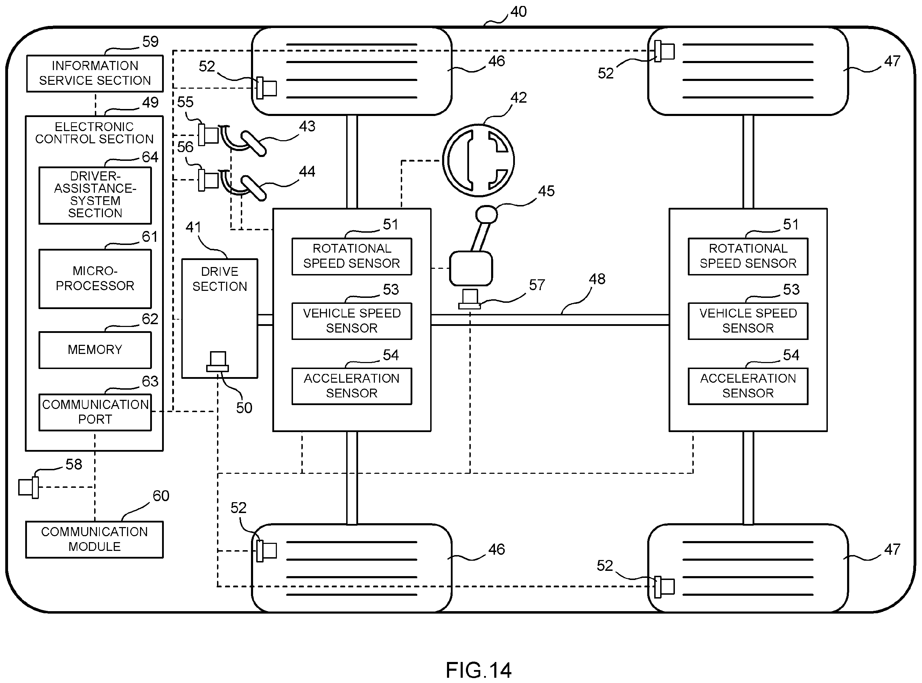

FIG. 14 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives a first configuration related to a configured grant physical uplink shared channel (CG PUSCH) and a second configuration related to application of an indicated Transmission Configuration Indication (TCI) state; and
a control section that performs at least one of assumption, based on the second configuration, of a configuration related to a sounding reference signal resource indicator (SRI) field included in the first configuration and a configuration related to a precoding and number of layers field included in the first configuration and judgement, based on the second configuration, of an association between a CG PUSCH related to the first configuration and a sounding reference signal (SRS) resource set.

2. The terminal according to claim 1, wherein
the control section assumes, when the second configuration indicates application of one indicated TCI state, that a configuration related to one or a plurality of the SRI fields and a configuration related to one or a plurality of the precoding and number of layers fields are included in the first configuration.

3. The terminal according to claim 1, wherein
the control section judges, when the second configuration indicates a first indicated TCI state, that the CG PUSCH related to the first configuration is associated with a first SRS resource set, and
the control section judges, when the second configuration indicates a second indicated TCI state, that the CG PUSCH related to the first configuration is associated with a second SRS resource set.

4. The terminal according to claim 1, wherein
the control section assumes, when the second configuration indicates application of a plurality of indicated TCI states, that a configuration related to one or a plurality of the SRI fields and a configuration related to one or a plurality of the precoding and number of layers fields are included in the first configuration.

5. A radio communication method for a terminal, the radio communication method comprising:
receiving a first configuration related to a configured grant physical uplink shared channel (CG PUSCH) and a second configuration related to application of an indicated Transmission Configuration Indication (TCI) state; and
performing at least one of assumption, based on the second configuration, of a configuration related to a sounding reference signal resource indicator (SRI) field included in the first configuration and a configuration related to a precoding and number of layers field included in the first configuration and judgement, based on the second configuration, of an association between a CG PUSCH related to the first configuration and a sounding reference signal (SRS) resource set.

6. A base station comprising:
a transmitting section that transmits a first configuration related to a configured grant physical uplink shared channel (CG PUSCH) and a second configuration related to application of an indicated Transmission Configuration Indication (TCI) state; and
a control section that performs at least one of determination, based on the second configuration, of a configuration related to a sounding reference signal resource indicator (SRI) field included in the first configuration and a configuration related to a precoding and number of layers field included in the first configuration and indication, using the second configuration, of an association between a CG PUSCH related to the first configuration and a sounding reference signal (SRS) resource set.
